**Europäisches Patentamt**

**European Patent Office**

**Office européen des brevets**

(19)

(11) Numéro de publication: **0 201 397**
**B1**

(12) **FASCICULE DE BREVET EUROPÉEN**

(45) Date de publication du fascicule du brevet:
**12.10.88**

(21) Numéro de dépôt: **86400878.4**

(22) Date de dépôt: **23.04.86**

(51) Int. Cl.⁴: **E 21 B 23/10, F 04 F 5/46**

(54) Pompe à jet articulée, utilisable notamment en technique TFL pour activer les puits producteurs d'hydrocarbures ou d'eaux.

(30) Priorité: **06.05.85 FR 8506992**

(43) Date de publication de la demande:
**17.12.86 Bulletin 86/46**

(45) Mention de la délivrance du brevet:
**12.10.88 Bulletin 88/41**

(84) Etats contractants désignés:
**BE DE GB IT NL**

(56) Documents cité:
**GB-A-2 107 397**

(73) Titulaire: **INSTITUT FRANCAIS DU PETROLE, 4, Avenue de Bois- Préau, F-92502 Rueil- Malmaison (FR)**

(72) Inventeur: **Corteville, Jacques, 23, rue des Platanes, F-92500 Rueil- Malmaison (FR)**
Inventeur: **Pauc, André, 59, rue Clémenceau, F-78670 Villennes- sur- Seine (FR)**
Inventeur: **Hoffmann, Frédéric, 67,69 avenue Gambetta, F-92400 Courbevoie (FR)**

(74) Mandataire: **Aubel, Pierre, Institut Français du Pétrole Département Brevets 4, avenue de Bois Préau, F-92502 Rueil- Malmaison (FR)**

## Description

La présente invention concerne la conception d'une pompe hydraulique à jet, utilisable notamment pour activer les puits producteurs d'hydrocarbures ou d'eaux, avec une mise en place et un retrait de la pompe par une technique de circulation à travers les conduites dite TFL (Through-Flow-Lines).

La technique TFL permet la circulation d'outils ou instruments à travers les différentes installations d'un puits: équipements de collecte, tête de puits, tube de production (tubing). Afin de permettre le passage des outils de fond au travers de la tête de puits, cette dernière est équipée d'un dispositif permettant la jonction entre la conduite et le puits. Ce dispositif, appelé communément "lyre", consiste en une boucle d'environ 3 mètres de diamètre, permettant de passer de la position horizontale (ou inclinée) de la conduite de collecte à la position verticale du puits.

Pour qu'un outil puisse circuler à travers l'installation, il faut qu'il soit composé d'éléments articulés dont la longueur soit compatible avec le rayon de courbure de la lyre (1,5 m). Cette longueur ne dépasse pas en général 0,5 mètre.

La technique TFL évite, en production sous-marine, les opérations d'introduction et de retrait d'outils ou instruments au niveau de la tête de puits, opérations qui nécessitent la mise en oeuvre de moyens relativement importants comme, par exemple, l'équipement d'un navire avec positionnement dynamique. La technique TFL supprime l'intervention d'un navire de service, les équipements de fond étant introduits (et retirés) à travers les conduites à partir de la plate-forme de production.

L'objet de la présente invention est d'adapter une pompe à jet à la technique TFL, de façon à permettre l'installation de cette pompe dans le puits et son retrait suivant cette technique.

Le brevet britannique GB-A-2 107 397 décrit une pompe à jet possédant une articulation sphérique. Cette articulation est située à l'extrêmité inférieure (en aval) de la pompe proprement dite et non pas dans la partie centrale et fonctionnelle de la pompe.

L'art antérieur dans ce domaine est par exemple aussi illustré par les brevets US-A-3 052 302; GB-A-1 533 416 et US-A-3 781 134.

L'invention résoud ce problème en fournissant une pompe hydraulique à jet, utilisable notamment pour activer un puits producteur d'hydrocarbures ou d'eaux, cette pompe pouvant être mise en place dans un tube de production par circulation à travers ce tube jusqu'à l'emplacement choisi et comportant une duse adaptée pour être alimentée en fluide moteur, ladite duse ayant un orifice de sortie qui coopère avec un ensemble mélangeur-diffuseur placé dans le prolongement de cette duse, cette pompe étant caractérisée en ce qu'elle est formée d'au moins deux éléments articulés entre eux au niveau dudit mélangeur.

Selon un mode avantageux de réalisation, la pompe hydraulique à jet selon l'invention est caractérisée en ce qu'elle comporte un premier élément renfermant le diffuseur, cet élément étant terminé par une articulation sphérique entourant le mélangeur et un second élément ou corps entourant la duse et qui est terminé par une bague d'accouplement coopérant avec ladite articulation sphérique pour former une articulation du type rotule.

La description de l'invention se réfère aux figures suivantes:

- la figure 1 schématise le puits de production avec une pompe à jet classique,
- la figure 2 représente un mode de réalisation de la pompe à jet articulée faisant l'objet du présent brevet,
- la figure 3 illustre le passage de la pompe à travers la lyre en tête de puits, et
- la figure 4 détaille la partie articulée de la pompe.

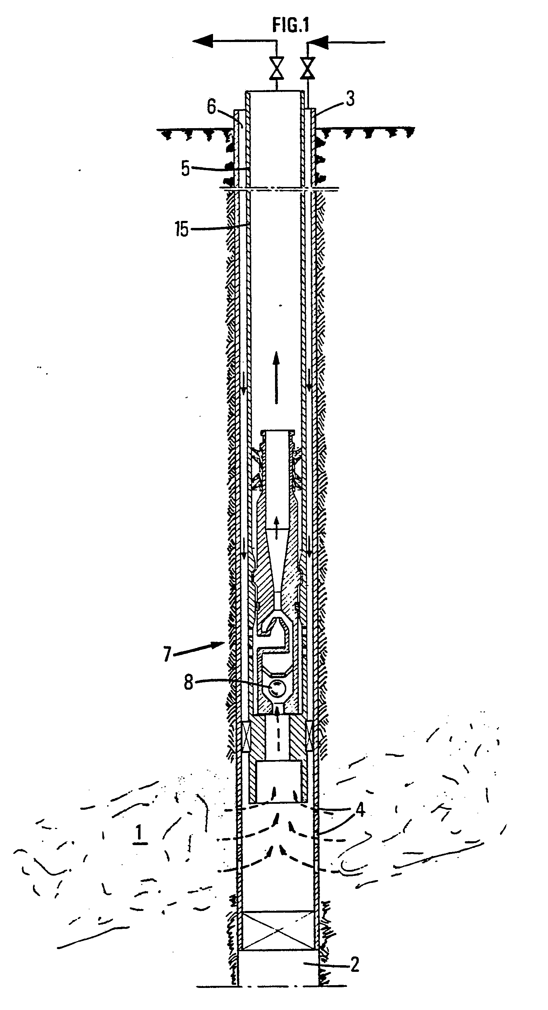

Sur la figure 1, la référence 1 désigne une formation géologique productrice dans laquelle a été foré un puits 2. Ce puits est équipé d'un tubage 3 (casing) comportant des perforations 4 au niveau de la couche productrice. La production peut être réalisée par simple ou par double complétion.

Dans le premier cas, le puits 2 n'est équipé que d'un seul tube de production 5 (tubing), tube qui forme avec le tubage 3 un espace annulaire 6 permettant la production. Dans le cas d'une complétion double, un second tube de production remplace l'espace annulaire 6.

La production est activée par une pompe à jet 7. La pompe est complétée par un clapet de fond 8 ("standing valve") qui évite le retour de la production vers le gisement 1.

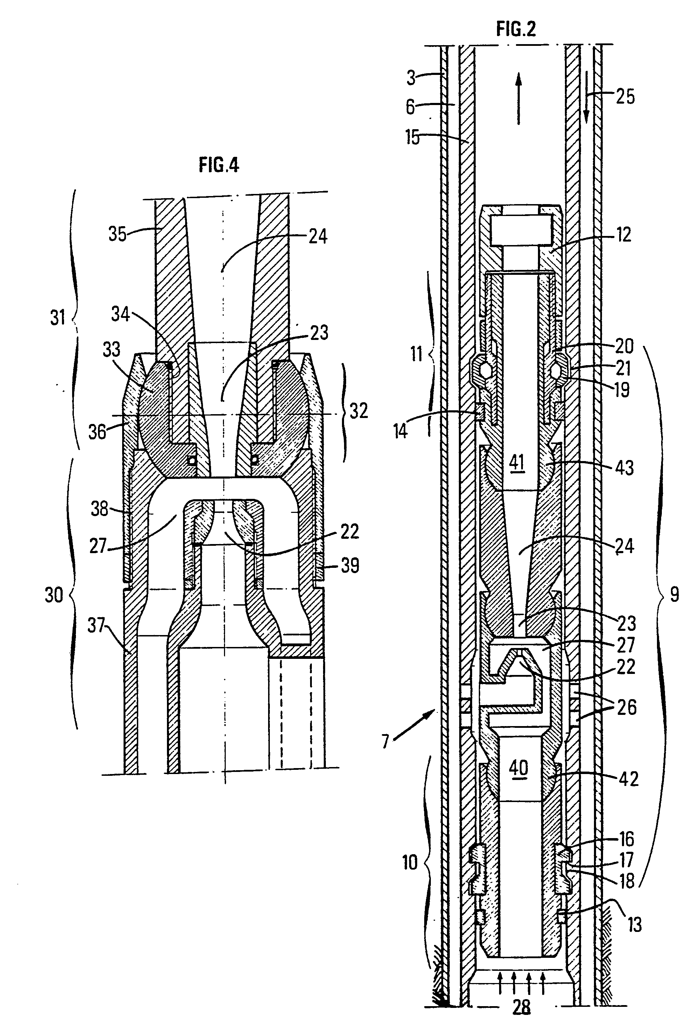

Cette pompe à jet classique a été réétudiée selon l'invention, pour être adaptée à la technique TFL. Elle est intégrée dans un ensemble 9 qui se compose, comme le montre la figure 2, des différentes parties suivantes:

- la pompe à jet 7,
- le module de localisation 10 ("locator mandrel"),
- le module de verrouillage 11 ("locking mandrel")
- un module d'accrochage 12 d'outils de pose et de dépose de la pompe.

La pose et le retrait de cet équipement de pompage se fait, soit de manière classique au moyen d'outils de pose et de repêchage adaptés, soit grâce à la méthode décrite dans la demande de brevet français E.N.85/02 285, par simple inversion du sens de circulation des fluides dans l'espace annulaire 6 et le tube 15 raccordé au tube de production 5.

Les modules de localisation 10 et de verrouillage 11 sont munis de joints 13 et 14 qui assurent l'étanchéité en aval et en amont de la pompe 7.

L'ensemble de fond 9 est installé librement dans le tube de production 15. Par ensemble "libre" on entend ici un ensemble pouvant se déplacer dans le tube de production 15, et qui en fonctionnement est fixé au tube 15 par l'intermédiaire du module de verrouillage 11. L'ancrage s'effectue lorsque le module de localisation 10 atteint la cote voulue dans le puits 2. Cet élément 10 se compose d'une "clé" 16 comportant une denture 17. Des évidements 18 aux formes complémentaires à celles de la denture 17 sont prévus dans le tube récepteur 15. Lorsque la pompe 7 atteint sa cote, l'ajustage de la denture 17 avec les évidements 18 positionne la pompe. L'ancrage s'effectue au niveau du module de verrouillage 11 par le blocage de "chiens" 19, solidaires de chemises coulissantes 20 dans les évidements correspondants 21, pratiqués dans le tube 15.

La pompe à jet 7 comprend essentiellement une duse 22, surmontée d'un ensemble mélangeur 23 et diffuseur 24. L'activation de la production est réalisée en injectant en surface, en 25, un fluide moteur dans l'espace annulaire 6. Ce fluide pénètre dans la duse 22 par l'intermédiaire d'orifices latéraux 26 ménagés dans le tube récepteur 15. La restriction de section de passage du fluide moteur au travers de la duse 22 forme un jet à haute vitesse. Ce jet provoque une dépression qui permet d'aspirer le fluide à pomper en 28 à la base du tube 15 et de l'entraîner au travers du col 27. Les deux fluides se réunissent dans le mélangeur 23. Le diffuseur 24 permet de transformer en pression dynamique l'énergie cinétique acquise par les fluides. Le gain de pression ainsi obtenu permet d'apporter la puissance nécessaire pour remonter à la surface la production.

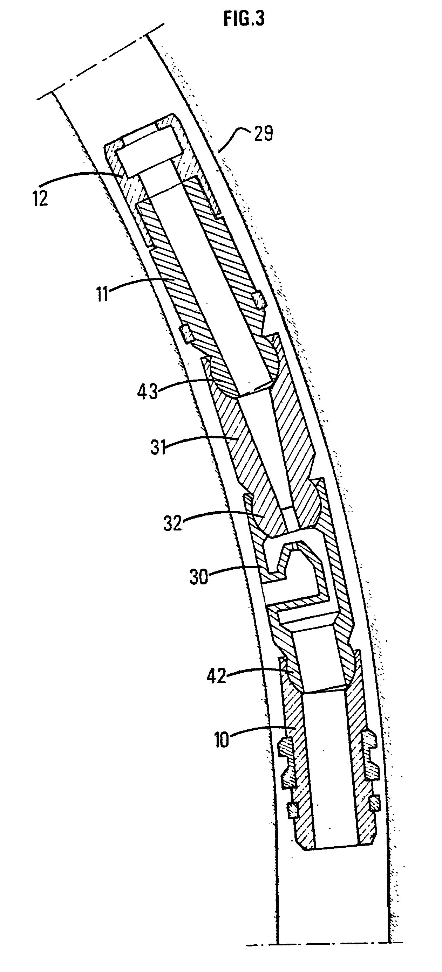

Les différentes parties de cet équipement sont articulées les unes par rapport aux autres afin de permettre la circulation de l'ensemble dans la "lyre" disposée en tête de puits et dont une partie est représentée schématiquement en 29 sur la figure 3.

La figure 4 détaille la partie articulée de la pompe à jet selon l'invention.

L'originalité de l'invention consiste à diviser la pompe en au moins deux parties articulées au niveau du mélangeur.

En effet, il apparaît que la dimension des éléments articulés pouvant circuler dans les installations TFL - longueur limitée à 0,5 mètre - n'est pas suffisante pour contenir une pompe à jet qui puisse assurer la production de débits importants avec des rendements énergétiques convenables; en particulier, le diffuseur, qui est un tube conique à très faible angle d'ouverture, ne peut être raccourci sans pertes de rendement.

Dans l'exemple de réalisation considéré, la pompe a été divisée en deux parties 30 et 31, articulées entre elles par une rotule 32, placée au niveau du mélangeur 23. L'articulation se compose d'une partie sphérique 33, fixée par un filetage 34 sur la pièce 35 comportant le diffuseur 24. Le mélangeur 23 est retenu entre les deux éléments 33 et 35. La liaison avec la deuxième partie de la pompe 30 se fait par l'intermédiaire de la bague d'accouplement 36. Cette bague 36 est fixée au corps 37 par le filetage 38 et maintenue par le contre-écrou 39.

L'aspiration 40 et le refoulement 41 de la pompe sont également reliés aux modules de localisation 10 et d'ancrage 11 par des rotules 42 et 43 du même type (Fig. 2).

Selon l'invention, l'articulation 32 est placée au niveau du mélangeur 23 plutôt que dans la partie diffuseur de la pompe. Dans ces conditions, comme il n'existe pas de contact mécanique direct entre la duse 22 et le mélangeur 23, les détériorations pouvant éventuellement survenir lors de la circulation des équipements de fond dans les installations n'affectent pas les parties essentielles de la pompe, à savoir, la duse, le mélangeur et le diffuseur.

D'autre part, en cet endroit, de faibles défauts d'alignement ou d'ajustement n'ont pas d'influence sensible sur les performances de la pompe.

Par ailleurs, cette localisation de l'articulation 32 permet un remplacement très aisé de la duse 22 et, éventuellement, de l'ensemble mélangeur 23-diffuseur 24.

Toutefois, en fonction de la taille de la pompe, il est possible de disposer des articulations supplémentaires en d'autres points de la pompe, par exemple à la sortie du mélangeur.

L'invention permet de garder les dimensions optimales des différentes parties de la pompe, surtout du diffuseur. Elle permet de faciliter la circulation de la pompe au travers des installations et de maintenir les performances de celle-ci.

**Revendications**

1. Pompe hydraulique à jet, utilisable notamment pour activer un puits producteur d'hydrocarbures ou d'eaux, cette pompe pouvant être mise en place dans un tube de production (15) par circulation à travers ce tube jusqu'à l'emplacement choisi et comportant une duse (22) adaptée pour être alimentée en fluide moteur, ladite duse ayant un orifice de sortie qui coopère avec un ensemble mélangeur-diffuseur (23, 24) placé dans le prolongement de cette duse, caractérisée en ce que cette pompe est formée d'au moins deux éléments (30, 31) articulés entre eux au niveau dudit mélangeur (23).

2. Pompe hydraulique à jet selon la revendication 1, caractérisée en ce qu'elle comporte un premier élément (35) renfermant le diffuseur (24), cet élément étant terminé par une articulation sphérique (33) entourant le mélangeur (23) et un second élément ou corps (37) entourant la duse (22) et qui est terminé par une bague d'accouplement (36) coopérant avec ladite articulation sphérique (33) pour former une articulation du type rotule (32).

**Patentansprüche**

1. Hydrauliscne Strahlpumpe, insbesondere verwendbar zur Aktivierung eines Produktionsbohrlochs für Kohlenwasserstoffe oder Wasser, wobei diese Pumpe einsetzbar ist in ein Produktionsrohr (tubing) (15) mit über dieses Rohr gehender Zirkulation bis zum gewählten Ort und mit einer Düse (22) für die Speisung mittels Antriebsfluids, wobei diese Düse (22) über eine Austrittsöffnung verfügt, die mit einer Mischer-Diffusor-Anordnung (23, 24) zusammenwirkt, welche in Verlängerung dieser Düse (22) angeordnet ist, dadurch gekennzeichnet, daß diese Pumpe aus wenigstens zwei Elementen (30, 31) gebildet ist, welche in Höhe dieses Mischers (23) untereinander gelenkig ausgebildet sind.

2. Hydraulische Strahlpumpe nach Anspruch 1, dadurch gekennzeichnet, daß sie ein erstes den Diffusor (24) einschließendes Element (35), welches in einem dem Mischer (23) umschließenden Kugelgelenk (33) endet sowie ein zweites Element oder einen Körper (37) umfaßt, der die Düse (22) umschließt und in einem Kupplungsring (36), der mit diesem Kugelgelenk (33) zusammenwirkt, endet, um eine gelenkige Verbindung vom Typ Knochengelenk (32) zu bilden.

**Claims**

1. Hydraulic jet pump which can be used in particular to activate a well producing hydrocarbons or water, this pump being capable of being located in position in a production tube (15) by circulation through this tube to the selected location and comprising a nozzle (22) adapted to be supplied with a driving fluid, said nozzle (22) having an outlet orifice which cooperates with a mixer-diffuser assembly (23, 24) located in the extension of this nozzle (22), characterised in that this pump is formed of at least two elements (30, 31) articulated together at said mixer (23).

2. Hydraulic jet pump as in claim 1, characterised in that it comprises a first element (35) enclosing the diffuser (24), this element being terminated by a spherical articulation (33) surrounding the mixer (23) and a second element or body (37) surrounding the nozzle (22) and which is terminated by a coupling ring (36) cooperating with said spherical articulation (33) to form an articulation of the ball joint type (32).

0 201 397

FIG.1

6

3

5

15

7

8

1

4

2

1

FIG.2

FIG.4

FIG.3